Europäisches Patentamt

**European Patent Office**

**Office européen des brevets**

(19)

(11) Veröffentlichungsnummer: **0 148 327 B1**

(12) **EUROPÄISCHE PATENTSCHRIFT**

(45) Veröffentlichungstag der Patentschrift:
**01.06.88**

(51) Int. Cl.⁴: **B 29 C 31/06, B 29 C 39/24**

(21) Anmeldenummer: **84111598.3**

(22) Anmeldetag: **28.09.84**

(54) **Kolbendosiervorrichtung einer Reaktionsgiessmaschine.**

(30) Priorität: **04.10.83 DE 3336036**

(43) Veröffentlichungstag der Anmeldung:
**17.07.85 Patentblatt 85/29**

(45) Bekanntmachung des Hinweises auf die Patenterteilung:
**01.06.88 Patentblatt 88/22**

(84) Benannte Vertragsstaaten:
**AT BE CH FR GB IT LI NL SE**

(56) Entgegenhaltungen:
**DD - A - 135 593**
**DE - A - 1 778 660**
**DE - A - 2 631 588**
**DE - A - 3 214 597**
**US - A - 3 537 619**

(73) Patentinhaber: **Krauss-Maffei Aktiengesellschaft,
Krauss-Maffei-Strasse 2, D-8000 München 50 (DE)**

(72) Erfinder: **Söchtig, Wolfgang, Dipl.-Ing., Finkenstrasse 1,
D-8034 Germering (DE)**
Erfinder: **Wagner, Peter, Dipl.-Ing.,
Josef-Lechenbauer-Strasse 9, D-8061 Weichs (DE)**
Erfinder: **Korzeczek, Karl-Ludwig, Dipl.-Ing., Uttinger
Strasse 23, D-8000 München 70 (DE)**

EP 0 148 327 B1

ACTORUM AG

## Beschreibung

Die Erfindung bezieht sich auf eine Dosiervorrichtung einer Reaktionsgiessmaschine gemäss Oberbegriff des Hauptanspruchs.

Eine Dosiervorrichtung dieser Art ist aus der US-PS 3 537 619 bekannt. Bei dieser Dosiervorrichtung sind die Einrichtungen zur Abdichtung des Dosierkolbens gegenüber der Zylinderwandung des Dosierzylinders am Dosierkolben angeordnet. Ferner stellt der Dosierkolben und der Kolben der hydraulischen Antriebseinheit ein einheitliches Bauteil dar, das sowohl die Stirnwand des Dosierzylinders als auch die Stirnwand des Zylinders der hydraulischen Antriebseinheit durchsetzt.

Diese Dosiervorrichtung hat den Nachteil, dass beim Ausbau des Dosierkolbens zum Zweck der Wartung und ggf. Erneuerung der Dichtungseinheit sowie zum Zweck der Inspektion der Innenwandungen des Zylinders zugleich auch die hydraulische Antriebseinheit zu demontieren ist. Der mit dem Dosierkolben gekoppelte Kolben der hydraulischen Antriebsvorrichtung stellt ein schweres und langes und somit ein schwer zu handhabendes Bauteil dar.

Der Erfindung liegt die Aufgabe zugrunde, bei einem Kolbendosiergerät der genannten Art die Wartungs- und Inspektionsmöglichkeiten zu vereinfachen und die Funktionsfähigkeit der Dichtungseinheit zu verbessern.

Diese Aufgabe wird durch die Merkmale aus dem Kennzeichen des Hauptanspruchs gelöst. Damit ergibt sich der Vorteil, dass bereits im Zylinderraum des Dosierzylinders ausreagierendes Material, wie es sich beispielsweise bei der Verarbeitung von Nylon infolge von Temperaturüberhöhung oder Alterung festsetzen kann, wegen der wesentlich verbesserten Zugänglichkeit leicht entfernt werden kann. Ein weiterer Vorteil ergibt sich hinsichtlich der Lebensdauer der Dichtung und der Verschleissanfälligkeit des Dosierkolbens und des Dosierzylinders, da die Praxis zeigt, dass fest im Zylinder gelagerte Dichtungseinheiten eine höhere Standfestigkeit besitzen und einen geringeren Verschleiss an der bewegten Fläche ergeben als in einem bewegten Kolben angeordnete Dichtungen.

Besonders zweckmässig ist die Dichtungskassette für die Anordnung von Einrichtungen zum Nachspannen des Dichtungspakets. Diese sind in jedem Betriebszustand, d.h. unabhängig von der Kolbenstellung und auch während des Betriebes kontrollierbar und nachstellbar.

In einer bevorzugten Ausführungsform weist die Dichtungskassette Einrichtungen zur Beaufschlagung des Dichtungspaketes mit Spül- und/oder Sperrmedien auf. Die Zufuhr derartiger Medien erfolgt in besonders einfacher Weise über eine an die Aussenwandung der Dichtungskassette angeschlossene Leitung.

Um die Demontierbarkeit zu verbessern, ist der Dosierkolben an der Hydraulik-Kolbenstange lösbar befestigt. Zusammen mit dem Merkmal, dass die Dichtungskassette vom Dosierkolben trennbar ist und nach dem Lösen des Dosierkolbens von der Hydraulik-Kolbenstange seitlich entnehmbar ist, ergibt sich der Vorteil, dass die Kolbendosiervorrichtung eine zumindest um die Höhenabmessung der Dichtungskassette niedrigere Bauhöhe aufweist als die bekannten Ausführungsformen, bei denen die Dichtungseinheit am Dosierkolben angeordnet ist.

Eine weitere Verbesserung der Demontierbarkeit beinhaltet die Anordnung von Zugstangen, über welche die hydraulische Antriebseinheit mit dem Dosierzylinder verbunden ist, wobei eine Zugstange in einem Schwenklager und die übrigen Zugstangen mittels lösbarer Schraubverbindungen in der hydraulischen Antriebseinheit befestigt sind. Die Antriebseinheit ist damit, ggf. zusammen mit dem Dosierkolben und der gelösten Dichtungskassette, vom Dosierzylinder abschwenkbar, so dass der Zylinderraum ohne Behinderungen für Inspektion und Wartungsarbeiten zugänglich ist.

In einer bevorzugten Ausführungsform ist im Zylinderboden in der Kreuzungsstelle der an einem Vorratsbehälter angeschlossenen Komponentenzulaufleitung, der zu einem Mischkopf der Reaktionsgiessmaschine führenden Komponentenablaufleitung und einer mit dem Zylinderraum des Dosierzylinders in Verbindung stehenden Verbindungsleitung ein zwangsweise zwischen zwei Schaltstellungen steuerbares Umschaltventil angeordnet, in dessen einer Schaltstellung der Zylinderraum über die Komponentenzulaufleitung mit dem Vorratsbehälter und in dessen anderer Schaltstellung der Zylinderraum über die Komponentenablaufleitung mit dem Mischkopf der Reaktionsgiessmaschine verbindbar ist. Im Vergleich zu den bisher verwendeten Vorrichtungen, bei denen ausserhalb des Zylinderbodens je ein zwangsweise steuerbares Schaltventil oder je ein Rückschlagventil in der Komponentenzulaufleitung bzw. Komponentenablaufleitung angeordnet sind, hat die vorbeschriebene Ausführungsform, abgesehen von der Tatsache, dass nur noch ein Schaltventil notwendig ist, den Vorteil, dass das Umschaltventil wesentlich strömungsgünstiger ausgebildet werden kann. Es sind keine Toträume in Kauf zu nehmen, in denen sich aus einer füllstoffbeladenen Komponente Füllstoffmaterial ablagern kann, mit der Gefahr, dass es in Form von ausgehärteten Klumpen wieder mitgerissen wird und zu Verstopfungen der Anlage führt. Infolge der Tatsache, dass das Umschaltventil im Zylinderboden des Dosierzylinders angeordnet ist, erübrigt sich bei der Verarbeitung von hohen Temperaturen erfordernden Materialien auch die Anordnung einer gesonderten Heizung für das Schaltventil, wie sie bei den bisher verwendeten, ausserhalb des Dosierzylinders angeordneten Schaltventilen erforderlich ist.

Zweckmässigerweise ist im Zylinderboden eine vom Mischkopf rückführende Komponentenrücklaufleitung angeordnet, die vorzugsweise im spitzen Winkel in die Komponentenzulaufleitung entgegen deren Strömungsrichtung einmündet. Diese Anordnung ist insbesondere bei der Verarbeitung von füllstoffbeladenen Komponenten vorteilhaft, weil die rückströmende Komponentenmenge einem Ablagern der Füllstoffbestandteile in der intervallweise abgesperrten Komponentenzulaufleitung entgegenwirkt. Ein weiterer Vorteil ist insbesondere bei Komponenten zu sehen, die bei hohen Temperaturen verarbeitet werden müssen, da die Rückführung in den Zylinderboden einfacher herzustellen ist als eine Rückführung in den Vorratsbehälter. Ein Anschluss an einen derartigen Vorratsbehälter ist wegen des Heiz- und Isoliermantels verhältnismässig aufwendig.

Ein Ausführungsbeispiel der Erfindung wird nachfolgend anhand der Zeichnung näher erläutert.

Es zeigen
Fig. 1 einen Schnitt durch eine Kolbendosiervorrichtung mit einer hydraulischen Antriebsvorrichtung und einem Dosierzylinder mit in der unteren Totpunktstellung befindlichem Dosierkolben,
Fig. 2 die Kolbendosiervorrichtung nach Fig. 1 mit vom Dosierzylinder gelöster Kassettendichtung und teilausgefahrenem Dosierkolben,
Fig. 3 die Kolbendosiervorrichtung mit gelöster Kassettendichtung und von der Hydraulikkolbenstange getrenntem Dosierkolben,
Fig. 4 die Kolbendosiervorrichtung mit entfernter Kassettendichtung und mit der hydraulischen Antriebsvorrichtung abgeschwenktem Dosierkolben,
Fig. 5 einen Schnitt durch die Kassettendichtung nach Fig. 1 in vergrössertem Massstab,
Fig. 6 den Zylinderboden der Kolbendosiervorrichtung nach Fig. 1 im vergrösserten Massstab mit einer den Zylinderraum mit der Komponentenzuführleitung verbindenden Schaltstellung des Umschaltventils,
Fig. 7 den Zylinderboden nach Fig. 6 mit einer den Zylinderraum mit der Komponentenablaufleitung verbindenden Schaltstellung des Umschaltventils und
Fig. 8 den Zylinderboden gemäss der Schnittlinie VIII–VIII in Fig. 6.

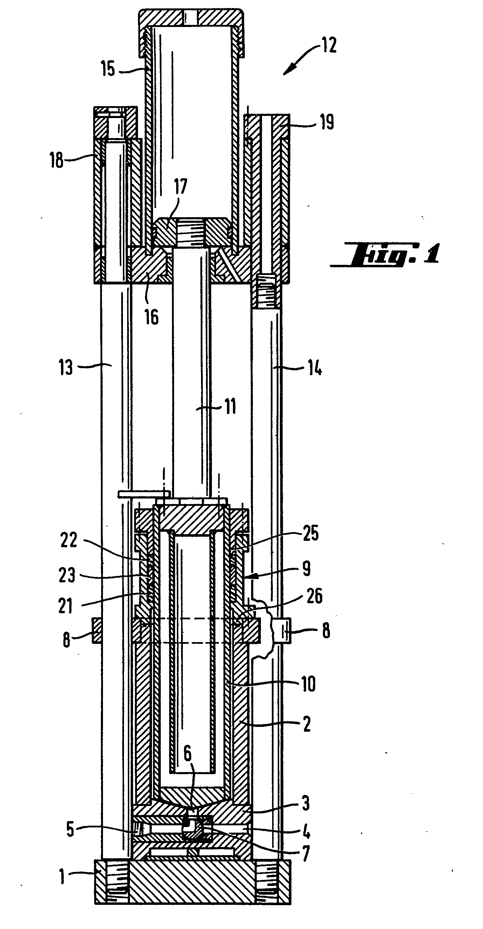

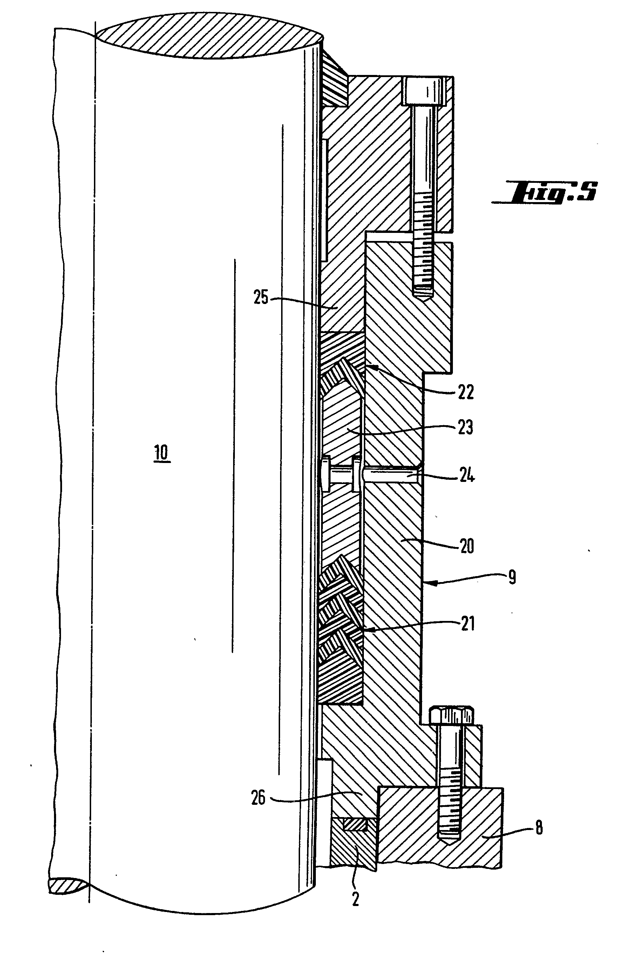

Die in Fig. 1 dargestellte Kolben dosiervorrichtung besteht aus einer Grundplatte 1, auf welcher ein Dosierzylinder 2 und ein Zylinderboden 3 befestigt sind. Der Zylinderboden 3 enthält eine an einen Komponenten-Vorratsbehälter (nicht dargestellt) anschliessbare Komponentenzulaufleitung 4, eine zu einem Mischkopf (nicht dargestellt) führende Komponentenablaufleitung 5 sowie eine zum Zylinderraum des Dosierzylinders 2 führende Verbindungsleitung 6. Im Kreuzungspunkt dieser drei Leitungen 4, 5 und 6 befindet sich ein zwangsweise betätigbares Schaltventil 7. Die Unterseite des Zylinderbodens weist einen Hohlraum für die Beheizung des Dosierzylinders 2 auf. Der obere Rand des Dosierzylinders 2 schliesst mit einem Flanschring 8 ab, auf dem eine Dichtungskassette 9 (Fig. 5) befestigt ist. Der Dosierzylinder 2 und die Dichtungskassette 9 umfassen einen als Tauch- bzw. Plungerkolben ausgebildeten Dosierkolben 10.

Der Dosierkolben 10 ist an einer Hydraulik-Kolbenstange 11 einer hydraulischen Antriebseinheit 12 lösbar befestigt, die von zwei in der Grundplatte 1 verankerten Zugstangen 13 und 14 getragen wird. Der den Dosierzylinder 2 nach oben begrenzende Flanschring 8 wird von den Zugstangen 13 und 14 durchsetzt. Die hydraulische Antriebseinheit 12 besteht aus einem Hydraulikzylinder 15 der unten von einer Bodenplatte 16 abgeschlossen wird und in dem die Zugstangen 13 und 14 befestigt sind. Durch die Bodenplatte 16 verläuft die Hydraulik-Kolbenstange 11, die mit einem Ende am Dosierkolben 10 und mit dem anderen Ende an einem doppeltwirkenden Hydraulik-Kolben 17 befestigt ist. Die Zugstange 13 ist an der Bodenplatte 16 mittels eines Schwenklagers 18 und die Zugstange 14 ist mittels einer Schraubverbindung 19 an der Bodenplatte 16 befestigt.

Die Fig. 5 zeigt die Dichtungskassette 9, die aus einem Kassettengehäuse 20 besteht, in dem ein unteres und ein oberes Dichtungspaket 21 und 22 angeordnet sind. Beide Dichtungspakete sind durch eine Distanzeinrichtung 23 getrennt, die einen Ringhohlraum bildet, der über im Kassettengehäuse 20 befindliche Zufuröffnungen 24 mit Spül- und/oder Sperrmedium beaufschlagbar ist. Im oberen Bereich ist am Kassettengehäuse 20 ein Führungsring 25 mit einer Tauchkolben-Führungsfläche angeordnet, der gleichzeitig als Zustellring bei Dichtungsverschleiss dient. Im unteren Bereich hat das Kassettengehäuse 20 eine weitere Tauchkolben-Führungsfläche ausgebildet und besitzt einen Kassettenflansch 26, mit dem die Dichtungskassette 9 auf den Flanschring 8 geschraubt und abdichtend auf den Dosierzylinder gedrückt ist.

Der Auswechselvorgang einer Dichtungskassette 9 erfordert nur wenige Handgriffe und kann schnell durchgeführt werden, wobei sich die bisher notwendige, gleichzeitige Demontage der hydraulischen Antriebsvorrichtung erübrigt

Zum Auswechseln der Dichtungskassette 9 oder zur Öffnung des Zylinderraumes des Dosierzylinders 2 für Inspektions- oder Wartungszwecke wird zunächst die Verschraubung am Kassettenflansch 26 gelöst, worauf der Dosierkolben 10 mittels der hydraulischen Antriebseinheit 12 zusammen mit der Dichtungskassette 9 nach oben gefahren wird.

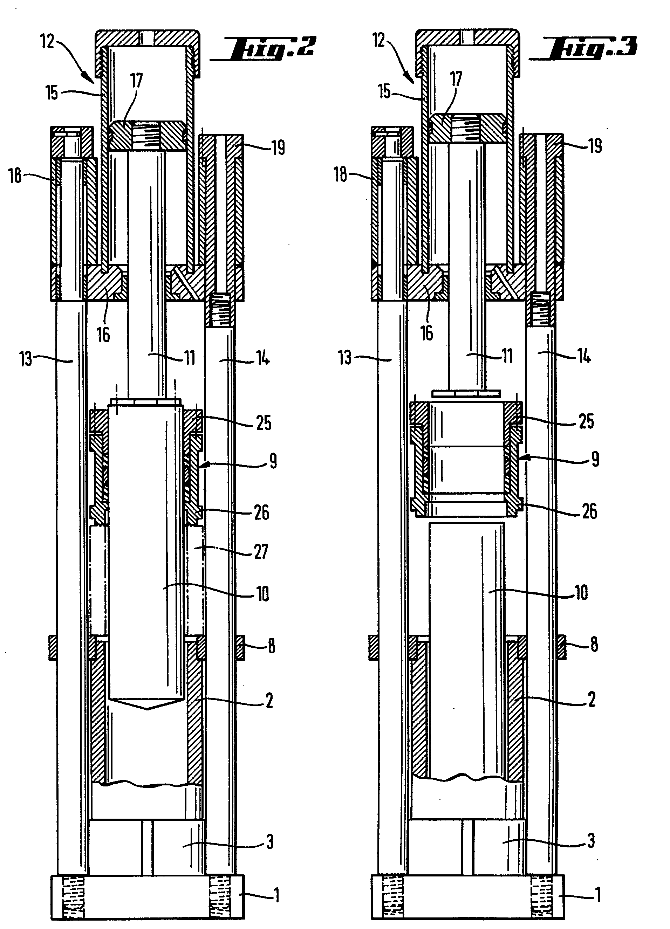

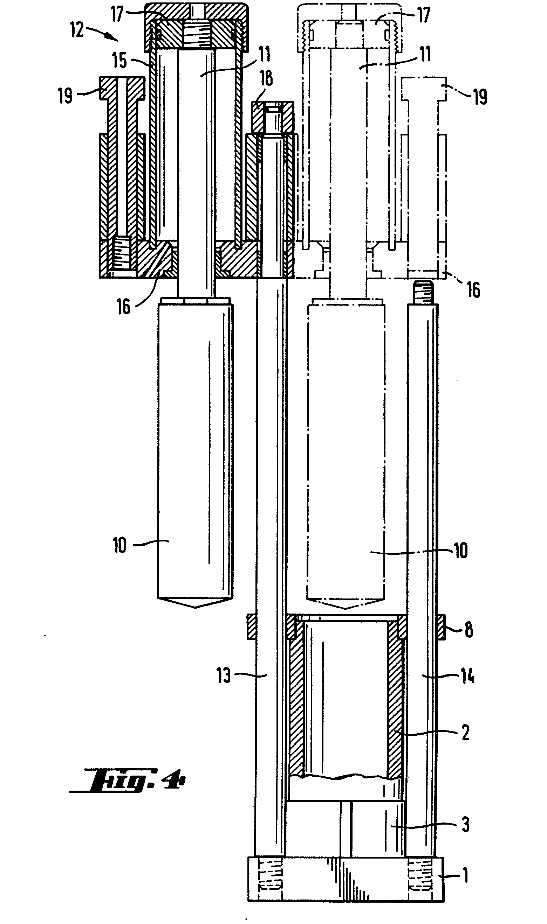

Zwischen dem Kassettenflansch 26 und dem Flanschring 8 werden zwei Distanzstücke 27 (Darstellung in strichpunktierten Linien in Fig. 2) eingesetzt, worauf der Dosierkolben 10 wieder heruntergefahren wird. Anschliessend wird die Verbindung zwischen der hydraulischen Kolbenstange 11 und dem Dosierkolben 10 gelöst und die Kolbenstange 11 wieder hochgefahren (Fig. 3). Die Dichtungskassette 9 ist als Einzelstück freigelegt und kann seitlich entnommen werden. Desgleichen kann der Dosierkolben 10 aus dem Dosierzylinder 2 herausgezogen werden, wodurch der Zylinderraum des Dosierzylinders 2 leicht zugänglich offengelegt wird.

Die Dichtungskassette 9 und der Dosierkolben 10 können somit in kürzester Zeit ausgebaut, überprüft und gewartet werden. Diese Teile sind leicht reparierbar oder durch Ersatzteile austauschbar. In jedem Fall kann die Kolbendosiervorrichtung in kurzer Zeit und mit geringem Montageaufwand wieder einsatzbereit gemacht werden.

Zur Verbesserung der Zugänglichkeit des Zylinderraumes ist die hydraulische Antriebseinheit abschwenkbar angeordnet. Hierfür ist lediglich die Schraubverbindung 19 der Zugstange 14 an der Bodenplatte 16 zu lösen, worauf die gesamte hydraulische Antriebseinheit 12, ggf. zusammen mit der Dichtungskassette 9 und dem Dosierkolben 10 um das Schwenklager 18 abgeschwenkt werden kann. In Fig. 4 ist mit strichpunktierten Linien die Antriebseinheit 12 mit dem Dosierkolben 10 in der Betriebsstellung dargestellt, wobei die Schraubverbindung 19 bereits gelöst ist. Die Darstellung in Vollinien zeigt die Antriebseinheit 12 und den Dosierkolben 10 im abgeschwenkten Zustand.

Damit wird der Zylinderraum des Dosierzylinders besonders gut zugänglich, was insbesondere für den Fall von Vorteil ist, wenn die Komponente beispielsweise infolge von Alterung oder Temperaturüberhöhung ausreagiert hat und das an den Innenwandungen festgesetzte Material nur unter Einsatz von Werkzeugen entfernt werden kann. Ein weiterer Vorteil ist darin zu sehen, dass die abschwenkbare hydraulische Antriebseinheit 12 quasi als Montagekran genutzt werden kann. Aufgrund der Möglichkeit, die hydraulische Kolbenstange 11 vom Dosierkolben 10 trennen zu können, fallen beim Auswechselvorgang auch nur Teile mit geringeren Abmessungen und geringerem Gewicht an, die auch ohne Zuhilfenahme eines Krans montiert werden können. Dadurch, dass die auszuwechselnden Teile seitlich entnehmbar sind, besteht auch keine Notwendigkeit, über der Kolbendosiervorrichtung einen freien Raum für die Demontage mittels eines Krans frei zu lassen. Dies ist der Fall bei den bisher bekannten Kolbendosiergeräten, bei denen der Dosierkolben, die hydraulische Kolbenstange und der Hydraulikkolben als eine einstückige, schwere Einheit nur mit dem Einsatz eines Montagekrans aus dem ebenfalls eine einstückige Einheit bildenden Dosierzylinder und Hydraulikzylinder entfernt werden kann.

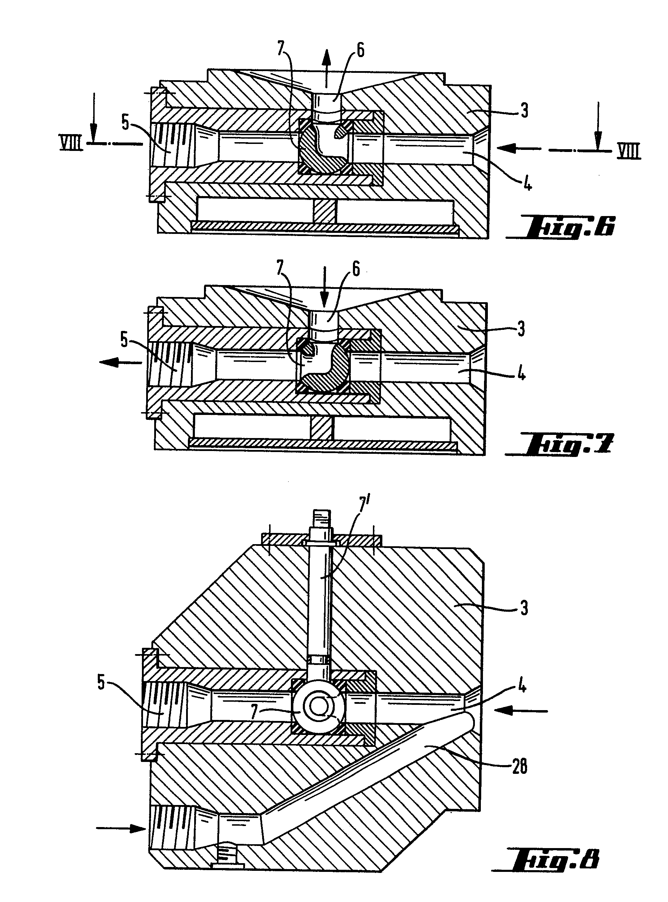

Die Fig. 6 zeigt den Zylinderboden 3, in dem das Umschaltventil 7 in einer den Vorratsbehälter mit dem Dosierzylinder verbindenden Stellung geschaltet ist, und Fig. 7 zeigt den Zylinderboden in einer den Dosierzylinder mit dem Mischkopf verbindenden Schaltstellung des Umschaltventils 7.

In Fig. 8 sind die Antriebswelle 7' des Umschaltventils 7 sowie die vom Mischkopf in die Komponentenzulaufleitung 4 einmündende Komponentenrücklaufleitung 28 dargestellt.

## Patentansprüche

1. Kolbendosiervorrichtung zum Dosieren der Komponenten, insbesondere füllstoffbeladener Komponenten einer Reaktionsgiessmaschine der RIM-Technologie, mit einem Dosierzylinder (2), dessen Zylinderraum von einer Zylinderwandung, einem gegenüber der Zylinderwandung mittels einer Dichtungseinheit abgedichteten Dosierkolben (10) und einem Zylinderboden (3) umschlossen ist, mit einer an den Dosierzylinder angeschlossenen Komponentenzulaufleitung und einer Komponentenablaufleitung und mit einer hydraulischen, mit dem Dosierkolben über eine Hydraulik-Kolbenstange gekoppelten Antriebseinheit, dadurch gekennzeichnet, dass der Dosierkolben (10) ein Tauch- bzw. Plungerkolben ist und die Dichtungseinheit in einer am oberen Rand des Dosierzylinders (2) lösbar befestigten und diesen nach oben abschliessenden Dichtungskassette (9) angeordnet ist und dass der Dosierkolben (10) an der Hydraulik-Kolbenstange (11) lösbar befestigt ist.

2. Kolbendosiervorrichtung nach Anspruch 1, dadurch gekennzeichnet, dass die Dichtungskassette (9) einen Zustellring zum Nachspannen des in ihr enthaltenen Dichtungspakets (21, 22) und zur Führung des Dosierkolbens (10) aufweist.

3. Kolbendosiervorrichtung nach den Ansprüchen 1 und 2, dadurch gekennzeichnet, dass die Dichtungskassette (9) Zufuhröffnungen (24) zur Beaufschlagung des Dichtungspakets (21, 22) mit Spül- und/oder Sperrmedien aufweist.

4. Kolbendosiervorrichtung nach den Ansprüchen 1 bis 3, dadurch gekennzeichnet, dass die hydraulische Antriebseinheit (12) mit dem Dosierzylinder (2) in an sich bekannter Weise mittels Zugstangen (13, 14) verbunden ist, von denen eine Zugstange (13) in einem Schwenklager (18) und die übrigen Zugstangen mittels lösbarer Schraubverbindungen (19) in der hydraulischen Antriebseinheit (12) befestigt sind.

5. Kolbendosiervorrichtung nach Anspruch 4, dadurch gekennzeichnet, dass zwei Zugstangen (13, 14) angeordnet sind.

## Revendications

1. Dispositif de dosage par piston pour doser les composants, en particulier les composants contenant une charge, d'une machine à couler par réaction en technologie RIM (moulage par injection et réaction), comportant un cylindre de dosage (2) dont la chambre est entourée par une paroi de cylindre, un piston doseur (10) dont l'étanchéité à l'égard de la paroi de cylindre est assurée par un organe d'étanchéité, et un fond (3) de cylindre, comportant aussi une conduite d'arrivée des composants et une conduite de départ des composants reliées au cylindre de dosage et comportant aussi un groupe d'entraînement hydraulique couplé au piston doseur par l'intermédiaire d'une tige de piston hydraulique, dispositif caractérisé en ce que le piston doseur (10 est un piston plongeur; en ce que l'organe d'étanchéité est disposé dans une cartouche d'étanchéité (9) fixée, de façon amovible, au bord supérieur du cylindre de dosage (2) et venant prolonger vers le haut ce cylindre; et en ce que le piston doseur (10) est fixé de façon amovible à la tige de piston hydraulique (11).

2. Dispositif de dosage par piston selon la revendication 1, caractérisé en ce que la cartouche d'étanchéité (9) présente une bague de reprise de réglage permettant de resserrer la garniture d'étanchéité (21, 22) qu'elle contient et de guider le piston doseur (10).

3. Dispositif de dosage par piston selon les revendications 1 et 2, caractérisé en ce que la cartouche d'étanchéité (9) présente des ouvertures d'amenée (24), par lesquelles un fluide de rinçage et/ou de blocage peut intervenir sur la garniture d'étanchéité (21, 22).

4. Dispositif de dosage par piston selon les revendications 1 à 3, caractérisé en ce que le groupe d'entraînement hydraulique (12) est relié au cylindre de dosage (2) d'une façon connue en soi, au moyen de tirants (13, 14) dont l'un (13) est fixé à une palier pivotant (18 et dont les autres sont fixés au groupe d'entraînement hydraulique (12) au moyen de liaisons par vissage amovibles (19).

5. Dispositif de dosage par piston selon la revendication 4, caractérisé en ce qu'il y a deux tirants (13, 14).

## Claims

1. Piston-type quantity-regulating device for the quantity-regulated supply of the components, especially filler-charged components, to a reaction casting machine in RIM technology, having a quantity-regulating cylinder (2), the cylinder chamber of which is enclosed by a cylinder wall, a quantity-regulating piston (10) sealed against the cylinder wall by means of a sealing unit, and a cylinder bottom piece (3), having a component admission conduit connected to the quantity-regulating cylinder and a component outlet conduit and having a hydraulic drive unit coupled with the quantity-regulating piston through a hydraulic piston rod, characterised in that the quantity-regulating piston (10) is a plunger piston and the sealing unit is arranged in a sealing cassette (9) which is detachably secured to the upper edge of the quantity-regulating cylinder (2) and upwardly closes the latter and in that the quantity-regulating piston (10) is detachably secured to the hydraulic piston rod (11).

2. Piston-type quantity-regulating device according to Claim 1, characterised in that the sealing cassette (9) comprises a closer ring for the retightening of the seal pack (21, 22) contained therein and for the guidance of the quantity-regulating piston (10).

3. Piston-type quantity-regulating device according to Claims 1 and 2, characterised in that the sealing cassette (9) comprises feed openings (24) for the charging of the seal pack (21, 22) with scaverging and/or blocking media.

4. Piston-type quantity-regulating device according to Claims 1 to 3, characterised in that the hydraulic drive unit (12) is connected with the quantity-regulating cylinder (2) in a manner known per se by means of tie rods (13, 14), of which one tie rod (13) is secured in a pivot bearing (18) and the other tie rods are secured by means of releasable screw connections (19) in the hydraulic drive unit (12).

5. Piston-type quantity-regulating device according to Claim 4, characterised in that two tie rods (13, 14) are arranged.

1/5

Fig. 1

Fig:2   Fig:3

**Fig. 4**

Fig.5

25

10

22

23

24

20

9

21

26

2

8

Fig.6

Fig.7

Fig.8